# EUROPEAN PATENT SPECIFICATION

(11) **EP 2 057 004 B1**
(45) Date of publication and mention of the grant of the patent: **23.12.2015**
(21) Application number: 07785751.4
(22) Date of filing: 28.08.2007
(51) Int. Cl.: F28F 21/06, B29L 31/18, B29C 65/02, B29C 51/26, F28F 3/14

(54) **METHOD FOR MANUFACTURING A HEAT EXCHANGER**
VERFAHREN ZUR HERSTELLUNG EINES WÄRMETAUSCHERS
PROCÉDÉ DE FABRICATION D'UN ÉCHANGEUR DE CHALEUR

(30) Priority: 28.08.2006 DK 200601113
(43) Date of publication of application: 13.05.2009
(73) Proprietor: Dantherm Air Handling A/S, 7800 Skive (DK)
(72) Inventor: KRISTENSEN, Erik, 8800 Viborg (DK); JENSEN, Dennis Naldal, 9560 Hadsund (DK)
(74) Representative: Henriksson, Dan Ragnar Mikael
(86) International application number: PCT/DK2007/000387
(87) International publication number: WO 2008/025359

(56) References cited:
- EP-A- 0 315 052
- EP-A- 1 624 271
- WO-A-02/12815
- WO-A-02/27257
- WO-A-98/20292
- WO-A-98/31529
- WO-A-99/13280
- WO-A-99/14101
- WO-A-99/22160
- DE-A1- 2 553 574
- US-A- 3 274 672
- US-A1- 2005 236 151

## Description

The present invention relates to a method for manufacturing a heat exchanger from a plastic material, said method comprising the steps of:
- feeding of at least two sheet elements made from said plastic material,
- by means of shaping means, shaping of said sheet elements to form a number of heat exchanger plates, whereby said shaping means are adapted to also undertake joining the sheet elements partly along edges so that a fluid inlet and a fluid outlet are created, whereby the sheet elements are pressed together, and
- two or more heat exchanger plates are stacked on top of one another.

Heat exchanging equipment is widely used for changing or maintaining the temperatures of machinery, buildings, components and the like. Basically, such equipment operate by conveying heat energy from one place to another, either by removing heat from an object to be cooled down or by transferring heat to an object to be warmed up.

Examples of heat exchanging equipment from everyday life are radiators and refrigerators, which transfer heat energy by circulating one or more fluids through an arrangement of pipes.

The basic principle of most heat exchangers is to transfer heat between two or more fluid flows. One of the fluids can be atmospheric air. The heat transfer first of all happens due to the temperature gradient, as the respective fluids are moving towards thermal equilibrium. The magnitude of the heat transfer is proportional to the contact surface between the fluid and the surroundings, meaning that a heat exchanger becomes more efficient if this contact surface is maximised. Secondly, heat can move faster to and from the contact surface if the heat convection in the fluid is increased. A way to increase the convection within the fluids is to design the heat exchanger so that the fluid flows are turbulent, as the convection is highly dependent on a turbulent flow.

A turbulent flow increases the pressure loss in the heat exchanger, which increases the amount of energy needed to circulate the fluid. Hence, in order to keep the cost of the heat exchangers low, the design must balance the need for turbulence with the need to keep the pressure loss low. In the current art this balance is sought by rather complex designs of heat exchangers.

It is a further requirement to the manufacturing of heat exchangers that they are as tight as possible in order to ensure an efficient heat transfer. Furthermore, for some applications it is relevant to prevent leakage of dangerous fluids such as refrigerants to the surroundings, which could result in hazardous contamination and system malfunctions.

The manufacturing method must ensure that the heat exchangers possess a certain strength to be able to sustain the pressure from the fluid flows. The higher the pressure a heat exchanger can sustain, the more versatile it is in application. Thus it is a requirement to be able to manufacture the heat exchanger to be as strong as possible.

Heat exchangers are often required to convey two or more fluids. With two or more fluid flow types, the manufacturing method must enable production of heat exchangers with two or more sets of fluid inlets and outlets. Furthermore, these inlets and outlets should be positioned and designed to make for easy and tight coupling to other components.

Heat exchangers must be manufactured from a material that enables a high degree of heat transfer. Also the material must be resistant to chemical reactions with the fluids it is to convey, it must be adequately strong and tight, and it must not be too expensive.

To sum up, a competitive heat exchanger design must ensure a low pressure loss, a high contact surface between the fluids, and a high rate of convection in the fluids in order to provide an efficient heat exchange. Furthermore, the heat exchanger should preferably be as tight as possible and be able to sustain as high pressure as possible. To comply with all these requirements, most current heat exchanger designs are complex constructions, for example comprising several ducts, grooves, and layers. In some cases, current heat exchangers are furthermore manufactured from a material that is expensive in itself or impacts the cost of manufacturing considerably.

The complex design needed to give the heat exchangers the required set of properties poses certain demands to the manufacturing method, since the key product properties such as low pressure loss, large contact surface, high convection, tightness, strength, etc. can not be compromised if the heat exchanger is to remain efficient.

As the heat exchangers disclosed by the current art are complex constructions, the manufacturing of them tends to be quite complex with several steps and manual interventions. The many steps and manual interventions entail several hazards to personnel security and impact the manufacturing costs considerably.

Most current heat exchangers are mass-produced components applied in products manufactured in high series. The heat exchangers' costs can easily amount to a considerable share of the total product cost. Hence, the ability to manufacture heat exchangers at a low cost while not compromising the characterising properties of the heat exchanger itself is imperative for any supplier of heat exchangers. Also, even small savings per produced heat exchanger can amount to considerable accumulated savings for the heat exchanger supplier as the heat exchangers are usually mass-produced. The cost of manufacturing is impacted by factors such as the machinery investment needed, the man-hours per product, the process time per product, the amount of scrap per product, etc. If the design of the item to be produced is highly complex, the manufacturing cost is considerable as the complex design necessitates high machinery investment, high tool investments, long process times, high scrap rates, etc. Furthermore, the manufacturing cost of the product which the heat exchanger is to become a component in, can be highly impacted on how suitable the heat exchanger is for mounting in assemblies.

The current art discloses heat exchangers with the disadvantage that the cost of manufacturing them is considerable due to one or more cost-impacting factors being sub optimal. Also, the current art discloses several manufacturing methods, which if applied to manufacturing of heat exchangers, would require considerable compromises in the characterising properties of the heat exchanger design. One of these compromises is that the manufactured heat exchangers are complicated to mount in assemblies.

Hence, there is a need for providing a method for low-cost manufacturing of an efficient heat exchanger that easily can be mounted in assemblies.

WO 02/27257 A1 (Dantherm HMS A/S) describes a heat exchanger comprising a stack of plate elements, each plate element being composed by an upper and a lower part forming longitudinally extending grooves there between. The lower and upper parts may be joined, e.g. by welding or gluing. The heat exchanger is encapsulated and sealed as other heat exchangers known in the art.

WO 98/31529 describes a heat exchange element for a film heat exchanger. The element may be made up of two heat exchange films stretched by means of heat and a pressure differential between the different sides of the film, the films being bonded directly to each other.

US 6,336,987 B1 discloses a heat exchange device composed by flexible mats. A production line may include two reels of mat material, and means may be provided for advancing the mats in between opposed mould dies in a mat embossing position, whereby a counterdie is positioned between the mats, and for moving the embossed mats into position between mat-joining tools.

WO02/12815 describes that stacked heat exchanger plates are joined in order to assemble them into a heat exchanger, whereby the stack of heat exchanger plates is welded so that the fluid inlets and fluid outlets of the respective heat exchanger plates are combined to form a common fluid inlet and a common fluid outlet, and whereby the sides of the heat exchanger plates are welded together, so that a fully functional heat exchanger is manufactured with plastic sheets as the only raw material.

The object of the present invention is to provide a more efficient method for producing a heat exchanger from a plastic material.

In view of this object, the method is characterized by that the stacked heat exchanger plates are joined in order to assemble them into a heat exchanger, whereby the stack of heat exchanger plates is welded so that the fluid inlets and fluid outlets of the respective heat exchanger plates are combined to form a common fluid inlet and a common fluid outlet, and whereby the sides of the heat exchanger plates are welded together, so that a fully functional heat exchanger is manufactured with plastic sheets as the only raw material whereby the sheet elements are joined by the shaping means, along part of the edges of the heat exchanger plate being formed, in such a way that a flange of sheet material extends beyond the joint, and whereby the stacked heat exchanger plates are joined by welding the edges of sheet material together, andwhereby the heat exchanger plates are cut free from the sheet material before stacking the heat exchanger plates, and whereby the edges of sheet material possibly sticking together along part of their length as a consequence of the cutting procedure are separated from each other by mechanical separation elements, before welding the edges of sheet material together.

Thereby, an efficient heat exchanger can quickly be assembled from the heat exchanger plates. The joining operation does not require any additional parts, and the joined stack of heat exchanger plates is a stable construction. Also, the stacking and joining steps enable easy modification of the heat exchanger's size and thus capacity, as it is simply a matter of changing the number of heat exchanger plates in each stack. In contrast to known heat exchangers, there is no encapsulation around the heat exchanger plate that has to be adapted to the number of heat exchanger plates employed in the heat exchanger. If very large modifications are needed this can also be achieved by the method by changing the thickness of the sheets, the material of the sheets or the type of mould used in the shaping step. Hence, the invention discloses a method for producing heat exchangers in a cheap, fast and versatile way. Additional the extending flanges greatly facilitate the welding procedure along the joints, because the outer rim of the flanges may be brought together and heated without affecting the already formed joint of the heat exchanger plate. Also the heat exchanger plates may be shaped still forming part of a sheet element, for instance a continuous length of material, whereby heat exchanger plates may be advanced along the production line by means of advancing the sheet elements. The employment of mechanical separation elements provides for a less critical cutting operation, whereby a simple knife edge may cut directly through the flanges of sheet material. By this cutting operation, the flanges of sheet material may cling together, but will subsequently be separated by means of the mechanical separation elements.

In an embodiment, during shaping of said sheet elements, a predetermined configuration is shaped by the sheets being placed in a mould, a vacuum being created between the mould and the individual sheets to establish a firm contact between the mould and the sheets, and subsequently pressure is applied against the surfaces of the sheets opposite the mould, whereby the predetermined configuration is shaped on the sheets.

In an embodiment, during shaping of said sheet elements, two sheet elements are positioned between two opposed vacuum forming moulds, and whereby the vacuum forming moulds are pressed against each other, whereby the two sheet elements are vacuum formed simultaneously and at the same time joined together at least along part of the edges of the heat exchanger plate being formed, as a result of the sheet elements being pressed together by the vacuum forming moulds. By vacuum forming the sheet elements simultaneously and at the same time joining them together along edges of the heat exchanger makes for a very strong sealing between the sheet elements. Thereby, in operation of the produced heat exchanger, it is possible to ensure that a first fluid flowing between the sheets of the respective heat exchanger plates is securely sealed from a second fluid flowing between sheets of adjacent heat exchanger plates.

In an embodiment, the two sheet elements are furthermore joined together between longitudinal channels being formed in the heat exchanger plate being formed, as a result of the sheet elements being pressed together by the vacuum forming moulds. Thereby, the direction of the fluid flow in the heat exchanger may be better controlled.

In an embodiment, before bringing the edges of the respective two sheet elements into contact with each other, at least one nozzle is introduced between edges of the respective two sheet elements, and, after bringing the edges into contact with each other, compressed gas is introduced between the sheet elements via the nozzle. Thereby, the sheet elements are formed more effectively.

In an advantageous embodiment, the mechanical separation elements comprises at least one mat-like element large enough to cover the corresponding length of edges of sheet material to be separated, and the heat exchanger plates are displaced in a direction normal to their general plane in relation to the mat-like element, so that the edges of sheet material are rubbed over the surface of the mat-like element, thereby causing the edges of sheet material to separate at least partially from each other. Thereby, the edges may be appropriately prepared for a final and entire separation by subsequent means.

In an advantageous embodiment, the mechanical separation elements comprises at least one slider that is displaced along at least part of an edge of the heat exchanger plate, thereby causing the edges of sheet material to separate at least partly from each other.

In an advantageous embodiment, the slider comprises a brush-like element that rubs along the edges of sheet material.

In an embodiment, during shaping of said sheet elements, corners of the heat exchanger plate being formed that edges of sheet material sticking together at the corners, as a consequence of the cutting procedure, are preloaded such that they automatically separate again just after the cutting procedure. Thereby, openings between edges of sheet material cling-ing together may be provided at the corners, thereby facilitating subsequent separation along the entire length of the edges by means of separation means that may get access to the area between the edges at said corner openings.

In an embodiment, during shaping of said sheet elements, welds with a zigzag or wave-like form are being formed along the edges of the heat exchanger plate, so that flanges of sheet material sticking together along said edges, as a consequence of the cutting procedure, are preloaded such that they automatically separate at least partly again just after the cutting procedure. Thereby, similarly to the case explained above, openings between flanges of sheet material clinging together may be provided along said edges, thereby facilitating subsequent separation along the entire length of the flanges by means of separation means that may get access to the area between the flanges at said openings.

In an embodiment, each sheet element made from plastic material is fed from a coil as a continuous length of sheet material, whereby, after shaping of said sheet elements, they are cut at the circumference of the heat exchanger plate formed except from a number of hinges maintaining the heat exchanger plate carried by the continuous length of sheet material, whereby the continuous lengths of sheet material are subsequently advanced so that the heat exchanger plate is positioned above the mechanical separation elements, and whereby the heat exchanger plate is subsequently displaced in downward direction, thereby punching it out from the continuous lengths of sheet material, whereby the hinges are broken, and thereby passing it along the mechanical separation elements. Thereby, the positioning of the heat exchanger plate above the mechanical separation elements may be facilitated. Only a limited force is necessary to finally separate the heat exchanger plates from the continuous length of sheet material by breaking the hinges, so the positioning may be performed accurately.

In an embodiment, the heat exchanger plates are stacked one after each other in a stack by positioning a first heat exchanger plate in the stack and subsequently positioning each following heat exchanger plate beneath the previously positioned heat exchanger plate in the stack, whereby the stack is carried by first support arms during positioning of a heat exchanger plate, and whereby a heat exchanger plate after positioning beneath the stack is lifted up by means of a second support arm, and the first support arms are retracted laterally from the stack, so that the second support arm carries the stack itself. Thereby, when the second support arm carries the entire stack of heat exchanger plates, the lowermost recently introduced heat exchanger plate is in close contact with the adjacent heat exchanger plate above, and therefore welding together of these two heat exchanger plates in the correct mutual position is greatly facilitated.

In an embodiment, the first support arms have the form of flaps supported in a horizontal position and hinged about a longitudinal axis, so that they are swung in upward direction and away from each other as a consequence of the stack passing between them during lifting of the stack by means of the second support arm. Thereby, the first support arms work automatically without any actuator.

In an embodiment, the edges of sheet material of adjacent heat exchanger plates in the stack, along the fluid inlets and fluid outlets of the heat exchanger plates, are welded together by means of heated jaws pinching the flanges against each other. Thereby, a smooth weld may be produced without burrs that could otherwise compromise the flow of fluid through the fluid outlets and fluid inlets of the heat exchanger plates in the finally produced heat exchanger.

In an embodiment, said edges are welded in two subsequent steps, whereby, in the first step, the edges are heated by means of jaws, and whereby, in the second step, the edges are welded together by means of jaws. Thereby, the edges of sheet material may be heated more carefully, whereby the risk that the edges deteriorate by melting during welding may be reduced.

In an embodiment, said edges of two adjacent heat exchanger plates in the stack are welded after the first support arms have been retracted laterally from the upper one of said two adjacent heat exchanger plates in the stack, so that the second support arm carries the stack during welding. Thereby, the two adjacent heat exchanger plates are pressed together during welding by the weight of the stack, thereby ensuring good contact during welding.

In an embodiment, the heat exchanger plates are welded together partly along their edges so that fluid inlets and fluid outlets are created for fluid passages between the heat exchanger plates, whereby the stacked heat exchanger plates, along edges not forming inlets nor outlets, are joined by welding the flanges of sheet material together by means of bringing sides of the stack of heat exchanger plates into contact with a heated plate, thereby welding all heat exchanger plates in the stack together simultaneously. Thereby, the welding operation may be performed very efficiently, because all heat exchanger plates in the stack are welded simultaneously.

The present invention furthermore relates to a heat exchanger produced as described above.

Advantageously, said method comprises that said plastic material is fed from a coil or as sheets. The plastic material can be any plastic material, such as polystyrene, polypropylene, polyvinyl chloride, polyethylene, acrylic plastic, rubber, polyamide, polycarbonate, or the like. The application area usually defines which plastic type that is most suitable. For heat exchangers said plastic material is preferably polypropylene with a fire inhibiting additive, in order to provide a fire-resistant material with a relatively high strength. Furthermore, the use of polypropylene makes the heat exchanger capable of absorbing moisture and provides a high degree of chemical resistance.

Preferably, said method further comprises a step of discharging said heat exchanger plates from said sheet elements. Said discharging step is preferably carried out by punching or cutting.

Advantageously, said method further comprises the steps of heating of said sheet elements to a forming temperature, placing said sheet elements in contact with a mould, applying vacuum between said sheet elements and said mould, applying pressure to the surfaces of the sheet elements opposite to the vacuum, thus shaping the sheet elements according to a configuration determined by said mould, and finally the sheet elements are joined together.

Heating the sheets prior to shaping them decreases the force needed to carry out the shaping, which enables a cheaper and faster shaping. Using the combination of vacuum and pressure to fasten and shape pre-heated sheets in a mould is a shaping process that is versatile enough to shape a heat exchanger plate with competitive heat exchange capabilities, while at the same time being cheap and fast enough to enable low-cost mass-production. The vacuum applied is preferably as close to a perfect vacuum as possible, even though the principle can also work at a partial vacuum. The speed of manufacturing that can be achieved with this method is well below 5 seconds per heat exchanger plate.

The invention will now be explained in more detail below by means of examples of embodiments with reference to the very schematic drawing, in which
Fig. 1 is a cross-section along the line I-I in Fig. 2 through a heat exchanger plate manufactured according to the invention,
Fig. 2 is a side view of the heat exchanger plate in Fig. 1, seen in the direction of the arrow II,
Fig. 3 is an end view of the heat exchanger plate in Fig. 1, seen in the direction of the arrow III,
Fig. 4 is a cross-section along the line IV-IV in Fig. 10a through a stack of heat exchanger plates welded together,
Fig. 5 is a side view of part of the stack of heat exchanger plates in Fig. 10a, seen in the direction of the arrow V in Fig. 4,
Fig. 6 is an end view of part of the stack of heat exchanger plates in Fig. 10a, seen in the direction of the arrow VI in Fig. 4,
Fig. 7 is a side view of a production line for manufacturing of heat exchanger plates, including the procedure of preliminary edge separation of the heat exchanger plates,
Fig. 8 is a side view of the preliminary edge separation station in Fig. 7, at another stage of the procedure of preliminary edge separation,
Fig. 9 is a top view of the procedure of final edge separation of a heat exchanger plate,
Fig. 10a to 10e show different stages of the procedure of stacking and jaw-welding of the heat exchanger plates,
Fig. 11 shows a cross-section along the line XI-XI in Fig. 10d of the procedure of jaw-welding of the heat exchanger plates,
Fig. 12 shows an end view of the procedure of plate-welding of the stack of heat exchanger plates,
Fig. 13 shows a cross-section along the line XIII-XIII in Fig. 12 of the procedure of plate-welding,
Fig. 14 shows a different embodiment of the heat exchanger plate, and
Fig. 15 to 17 show the fluid flow of different embodiments of a heat exchanger plate.

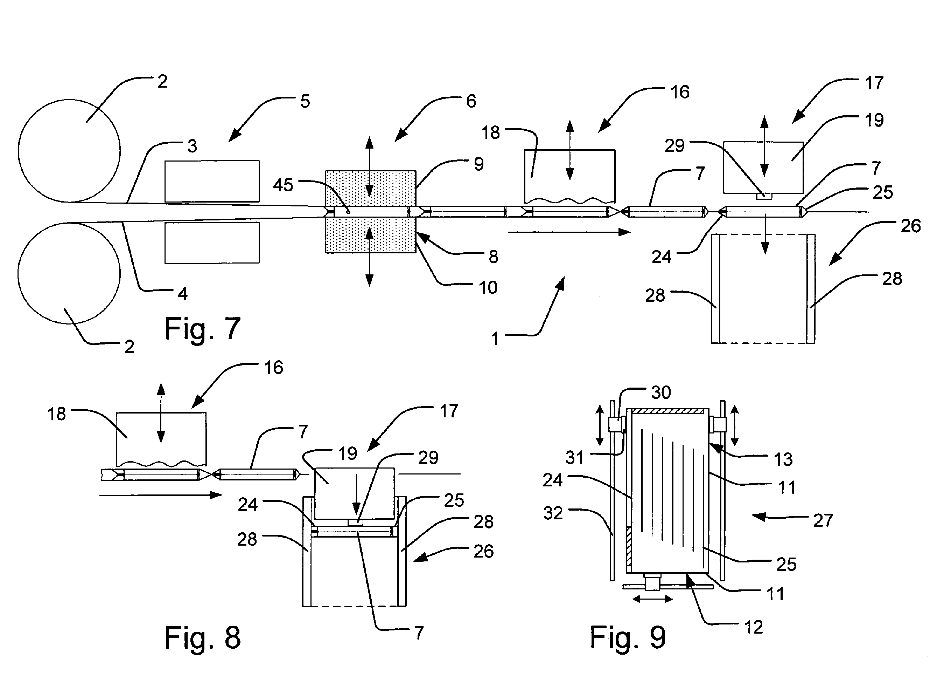

Fig. 7 shows a production line 1 for manufacturing of a heat exchanger plates 7 from plastic material according to the invention. An upper and a lower sheet element 3, 4 of plastic material are fed to the production line. The plastic material is fed from two coils 2 to make for a simple but automated feeding. The feeding can also be done as single sheets. Furthermore, the sheets can advantageously be fed in two layers to a not shown conveyor belt to prepare in an advantageous way for succeeding shaping. A further advantage of feeding two layers of sheets from two coils is that it can happen automatically. Additionally, feeding the material this way can be done at very high speed.

The fed sheet elements 3, 4 are subsequently heated to a forming temperature in a heating station 5 of the production line 1. The heating is preferably done in a heating means through which the sheets are moved by a not shown conveyor belt. Heating the sheets elements can also be done by rolling the sheet with warm rollers or by other kinds of contact with hot objects. The heating can advantageously be done in combination with the succeeding shaping step to minimise the heat loss in between the two steps and to decrease the time consumed. Preferably, the sheets elements are heated to a temperature close to their melting point in order to minimise the force needed to shape them. The heating step can be left out, but then the force required in the succeeding shaping step is much higher.

Following the heating station 5, shaping of a predetermined configuration in the plastic sheets 3, 4 is performed in a shaping station 6. This predetermined configuration highly impacts the properties of the heat exchanger plate 7. The predetermined configuration is shaped by the sheets 3, 4 being placed in a mould 8, a vacuum being created between the mould 8 and the individual sheets 3, 4 to establish a firm contact between the mould and the sheets, and subsequently pressure is applied against the surfaces of the sheets opposite the mould, whereby the predetermined configuration is shaped on the sheets. Preferably, the mould is also adapted to cool down the sheets to a setting temperature to enable as fast shaping as possible.

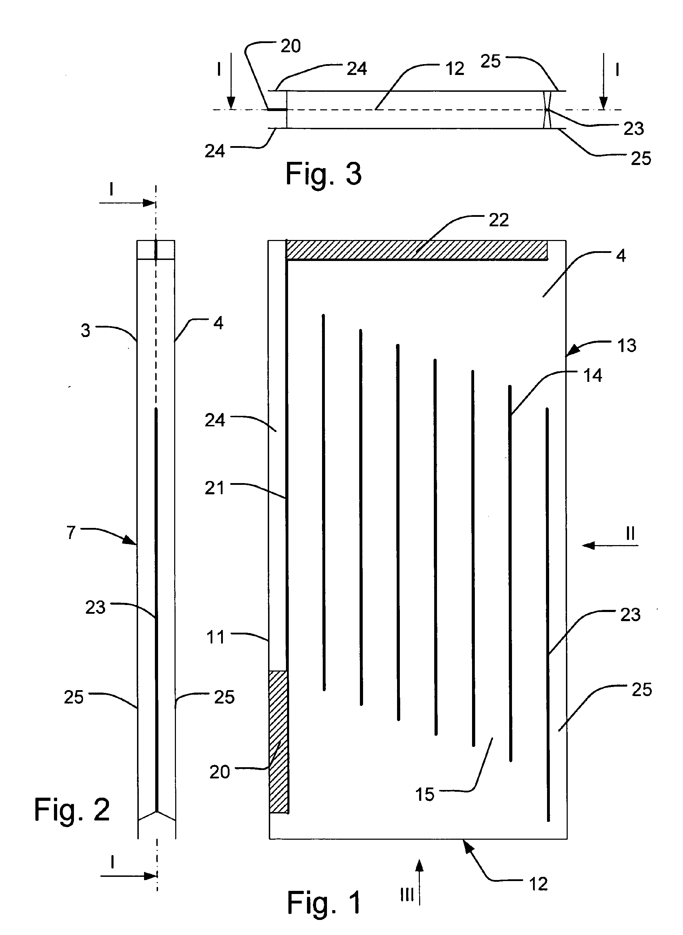

The mould 8 comprises an upper mould part 9 configured to form the upper sheet element 3 and a lower mould part 10 configured to form the lower sheet element 4. In order to form a heat exchanger plate 7, the mould parts 9, 10 are pressed against each other as indicated by the arrows, whereby the sheets elements 3, 4 are sandwiched between the mould parts 9, 10. When vacuum is provided in the mould cavities, the heated sheets adopt the configuration predetermined by said cavities. During the forming or shaping of the sheet elements 3, 4, as a result of the mould parts 9, 10 being pressed together, the sheet elements are also joined partly along edges 11 of the heat exchanger plate 7 to be formed, so that a fluid inlet 12 and a fluid outlet 13 are created, see Fig 1. The sheet elements may also be joined along longitudinal lines 14, in order to provide channels 15 for guiding the heat exchange fluid during operation of the heat exchanger. The joining is preferably done by pressing the sheet elements 3, 4 together to an extent where the stress created is beyond the yield strength of the sheet material, whereby a permanent connection is created. The pressure can advantageously be exerted by a mechanical or hydraulic press, or any other type of pressing means, whereby a welding or the like is obtained. Before bringing the edges of the respective two sheet elements 3, 4 into contact with each other, a number of nozzles 45, of which only one is shown in the figure, may be introduced between the edges of the respective two sheet elements, so that, after bringing the edges into contact with each other, compressed gas may be introduced between the sheet elements via the nozzle, in order to supplement the vacuum effect in forming or shaping the sheet elements.

After leaving the shaping station 6, the heat exchanger plates 7 are still attached to the sheet elements 3, 4 along their edges 11. An advantageous way to discharge the heat exchanger plates from the sheet elements is to punch them out with a mechanical or hydraulic punching means. In an embodiment, a cutting means in a cutting station 16 will cut the circumference of the heat exchanger plates 7 except from a number of hinges, and afterwards a punching means in a punching station 17 will finally punch the heat exchanger plates 7 out of the sheet elements 3, 4. The cutting means may simply be a knife 18 reciprocating in a direction normal to the sheet elements, or it may be any other kind of suitable means for cutting plastic sheet material. The punching means may similarly be a kind of knife or punch or it may simply be a piston 19 reciprocating in a direction normal to the sheet elements. This combination of a cutting means and punching means ensures a better control of the positions of the discharged plate. This is due to the fact that when a heat exchanger plate 7 is still attached to the sheet elements by means of the hinges, it may be moved with the sheet elements to a precise position and there be carefully punched out at this position, because the force necessary to cut over the hinges will be limited.

Fig. 1 shows a cross-section between the two sheet elements 3, 4 forming a heat exchanger plate 7, as it looks after having been punched out in the punching station 17. At the lower end of the heat exchanger plate 7, the sheet elements 3, 4 are not connected, and thereby the above-mentioned inlet 12 is formed. Similarly, at the upper part of its right side, the outlet 13 is formed. Of course, the location of the inlet and outlet may be reversed, if desired. The sheet elements 3, 4 are connected by welds, which in the following will be referred to as mould welds, because they were formed in the moulds of the shaping station 6. At the lower part of the left side of the heat exchanger plate 7 is seen a broad mould weld 20, and at the upper part of the left side is seen a narrow mould weld 21 at a distance from the edge 11 of the heat exchanger plate 7. Similarly, at the top is seen a broad mould weld 22, and at the lower right side is seen a narrow mould weld 23 at a distance from the edge 11. Along the narrow mould welds 21, 23, flanges 24, 25 of sheet material are formed; these flanges 24, 25 are intended to be welded together with corresponding flanges of adjacent heat exchanger plates 7 in a stack of heat exchanger plates, as will be explained below. Similarly, the free edges 11 of sheet material at the inlet 12 and at the outlet 13 are intended to be welded together with corresponding free edges of adjacent heat exchanger plates 7 in said stack of heat exchanger plates. However, when cutting out a heat exchanger plate 7 from the sheet elements 3, 4 in the cutting station 16, the flanges 24, 25 as well as the free edges 11 of sheet material at the inlet 12 and at the outlet 13 may tend to stick together, as indicated in Fig. 7, at the punching station 17.

In order to ensure that the flanges 24, 25 or the free edges 11 of sheet material do not stick together, when the heat exchanger plates 7 in said stack are to be welded together, the heat exchanger plates 7 are passed through a preliminary edge separation station 26, see Fig. 7 and 8, and a final edge separation station 27, see Fig. 9. The preliminary edge separation station 26 comprises a number of vertically arranged mats 28 positioned at such a distance that the flanges 24, 25 and free edges 11 of a heat exchanger plate 7 may rub against them, as the heat exchanger plate 7 is displaced in a downward direction. In the punching station 17, when a heat exchanger plate 7 is positioned below the piston 19 and is still hanging in the sheet elements 3, 4, the piston 19 is displaced downwards and attaches to the heat exchanger plate 7 by means of a vacuum injector or suction cup 29 arranged on the lower side of the piston 19. The heat exchanger plate 7 is thereby punched out from the sheet elements 3, 4, and, carried by the suction cup 29, it is displaced down through the mats 28 of the preliminary edge separation station 26, see Fig. 8. Thereby, the flanges 24, 25 and the free edges 11 of sheet material are at least partly separated.

In order to ensure totally separation of the flanges 24, 25 and the free edges 11 of sheet material, the heat exchanger plate 7 is, by means of a not shown conveyor, transferred from the preliminary edge separation station 26 to the final edge separation station 27 shown from above in Fig. 9. The final edge separation station 27 comprises three sliders 30 provided with brushes 31. The sliders 30 are displaceable along rails 32 arranged parallel with sides of the heat exchanger plate 7, so that the brushes may rub the flanges 24, 25 and the free edges 11 of sheet material of the heat exchanger plate 7, thereby ensuring total separation of said flanges and edges.

In order to facilitate the separation of the flanges 24, 25 and the free edges 11 of sheet material, the sheet elements 3, 4 forming a heat exchanger plate 7 may be welded together in a way urging said flanges and free edges away from each other, so that they may tend to separate automatically, after they possibly stick together as a result of the cutting procedure in the cutting station 16. This may be done, for instance, by designing the mould welded areas with a rather large cross-section in the direction normal to the heat exchanger plate 7, so that the free edges will have to bend much in order to stick together. Alternatively, the narrow mould welds 21, 23, see Fig. 1, may be designed with a zigzag or wave-like form, thereby urging the flanges 24, 25 away from each other. If the flanges or free edges separates automatically at a few positions, the separation procedure in the separation stations 26, 27 is facilitated, because the mats 28 and or the brushes 31 may easier get grip between the flanges or free edges and thereby separate the remaining part of these.

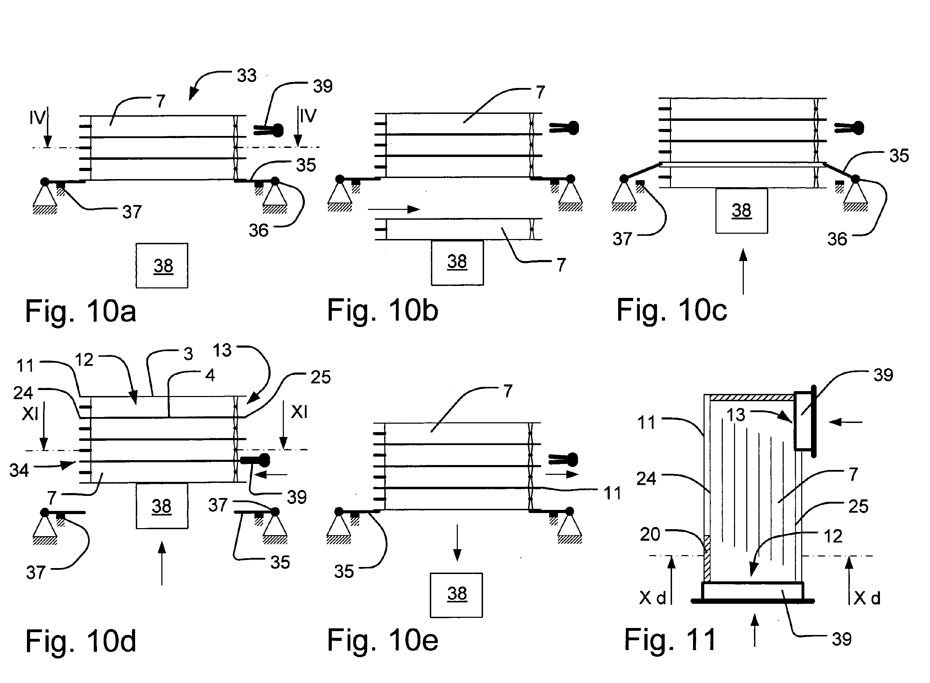

By means of a not shown conveyor, the heat exchanger plates 7 are transferred one by one from the final edge separation station 27 to a stacking and welding station 33 shown in Figs. 10a to 10e. In Fig. 10a, a stack 34 of three heat exchanger plates 7 is carried at its edges by first support arms in the form of two flaps 35 that are hinged about a horizontal axis 36 extending longitudinally in relation to the heat exchanger plates 7 and that are supported by an abutment 37 in a horizontal position. In Fig. 10b, a further heat exchanger plate 7 is introduced laterally beneath the stack 34 and positioned on a second support arm in the form of a vertically displaceable piston 38. In Fig. 10c, the piston 38 carrying the recently introduced heat exchanger plate 7 is displaced in upward direction, whereby the two flaps 35 are lifted by the edges of heat exchanger plate 7 and swung upwardly, and the stack 34 is displaced upward accordingly. In Fig. 10d, the piston 38 has been displaced even further in upward direction, so that the two flaps 35 have lost their engagement with the stack 34 and returned to their horizontal position by means of gravity or spring force, and the three heat exchanger plates 7 first forming part of the stack 34 are carried by the recently introduced heat exchanger plate 7, which in turn is carried by the piston 38. Thereby, the upper edges 11 of the recently introduced heat exchanger plate 7 are in good contact to be welded to the corresponding lower edges of the lowermost heat exchanger plate 7 of the three heat exchanger plates 7 first forming part of the stack 34. However, at the beginning, when there are only few heat exchanger plates 7 in the stack 34, a retaining element may be pressed against the upper side of the stack in order to press the edges to be welded together. Firstly, the edges 11 at the inlet 12 and at the outlet 13 are now welded by means of heated jaws 39 pinching the flanges against each other, see also Fig. 11. The heated jaws 39 are introduced laterally from the left side in the figure, as indicated by the arrow. After welding, the jaws 39 are retracted from the stack 34, and the piston 38 is lowered again, so that the flaps 35 carry the stack 34, as it may be seen in Fig. 10e. The jaw-welding procedure may be split up into two steps, whereby in the first step, the flanges are only heated by the jaws, and in the first step, the flanges are eventually welded. This may provide for a more careful procedure, whereby the risk of damaging the flanges by the heat may be reduced. The stacking and jaw-welding procedure from Fig. 10b to 10e is repeated until the stack 34 contains the desired number of heat exchanger plates 7. The amount of heat exchanger plates in each stack depends on the application of the heat exchanger. The stacking means can preferably be able to create stacks with varying amounts of heat exchanger plates. The stacking can also be done manually. The size and thus capacity of the heat exchanger assembled from the manufactured heat exchanger plates can be modified by changing the number of heat exchanger plates in each stack.

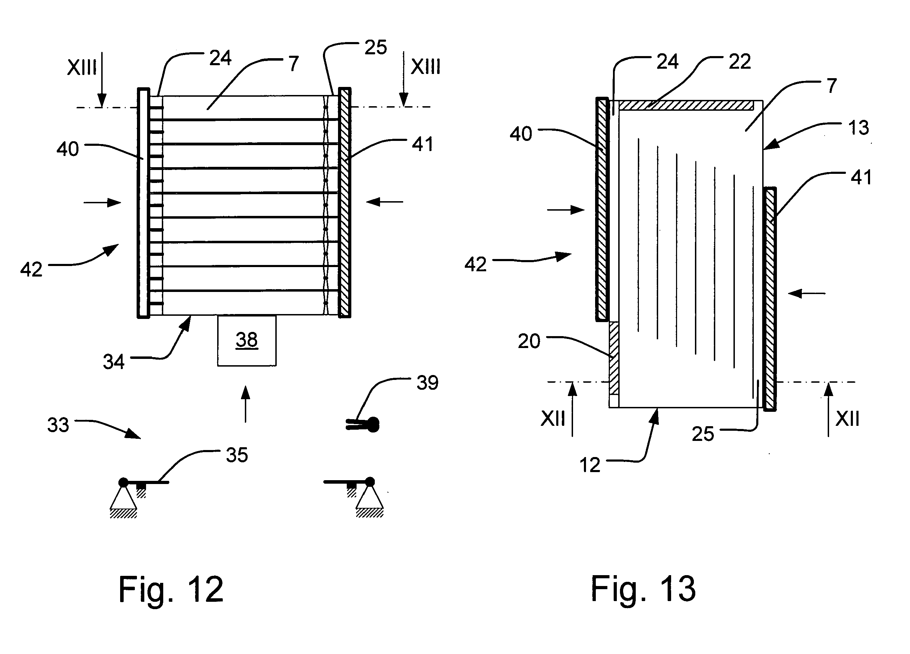

Subsequently to the stacking and jaw-welding procedure, the stack 34 is, by means of the piston 38, lifted even further than before, up and away from the stacking and welding station 33 to a plate-welding station 42, also called a hot mirror welding station, in which it is positioned between to opposed, vertically arranged heated welding plates 40, 41; see Fig. 12. The lifting procedure may be assisted by means of laterally arranged conveyor belts or the like. When the stack 34 is in position between the heated welding plates 40, 41, these are displaced laterally in the direction of the arrows into contact with the flanges 24, 25 of all the heat exchanger plates 7 that are thereby welded together side by side; see also Fig. 13. After the plate-welding procedure, the heated welding plates 40, 41 are retracted, and the finished heat exchanger in the form of the stack 34 is discharged from the production line.

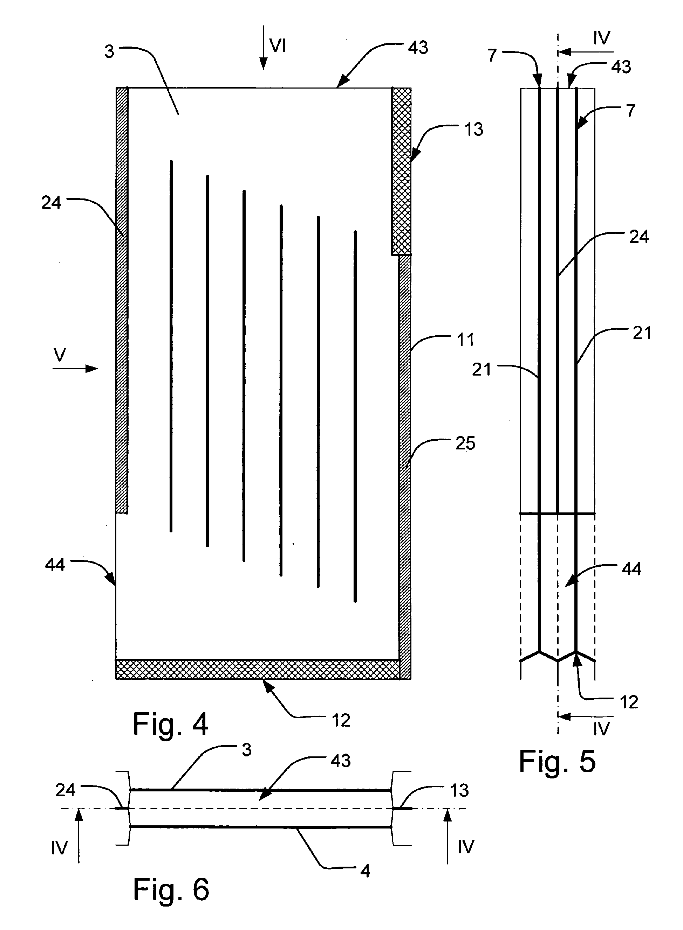

Fig. 4 shows a cross-section between two adjacent heat exchanger plates 7 of the finished heat exchanger. The heat exchanger plates 7 are welded together partly along their edges 11 so that fluid inlets 43 and fluid outlets 44 are created for fluid passages between the heat exchanger plates 7. The flanges 24, 25 are, as described above, plate-welded, and the edges 11 are jaw-welded at the inlets 12 and at the outlets 13 of the heat exchanger plates 7.

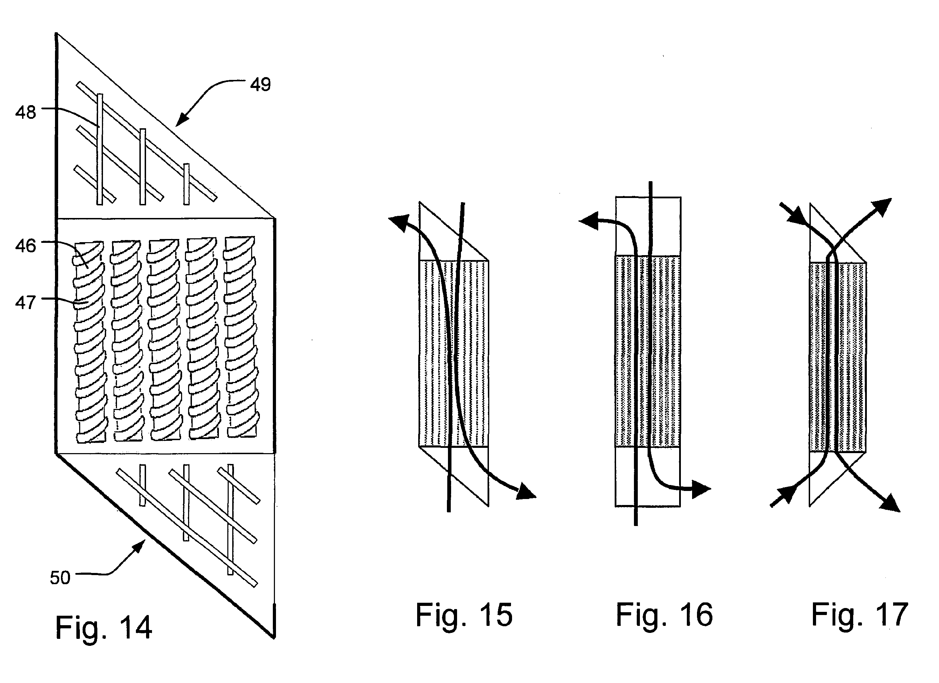

Although the method according to the invention has been explained above with reference to a heat exchanger composed by a stack 34 of heat exchanger plates 7 designed as shown in Figs. 1 to 6, it is evident to the person skilled in the art that, according to the invention, a heat exchanger may similarly be composed by heat exchanger plates having other designs. An example of a heat exchanger plate with a different design is shown in Fig. 14. The heat exchanger plate shown comprises ducts 46 with helical spirals 47 providing an efficient relation between laminar and turbulent fluid flow, guide ribs 48 for directing the fluid flow, a fluid inlet 49 and a fluid outlet 50. Fig. 15 shows the primary and secondary fluid flow directions in a heat exchanger composed by heat exchanger plates of the design shown in Fig. 14. Similarly, Fig. 16 shows the primary and secondary fluid flow directions in a heat exchanger composed by heat exchanger plates of the design shown in Figs. 1 to 6. Fig. 17 shows the primary and secondary fluid flow directions in a heat exchanger composed by heat exchanger plates of yet another design. The skilled person will understand that the production line 1 for manufacturing of heat exchanger plates 7 as well as the separation stations 26, 27, the stacking and welding station 33 and the plate-welding station 42 may be modified by simple adaptations in order to manufacture different designs of heat exchangers, for instance heat exchangers composed by heat exchanger plates as shown in Fig. 14 to 17.

Although the invention above has been described in connection with embodiments of the invention, it will be evident for a person skilled in the art that several modifications are conceivable without departing from the invention as defined by the following claims.

## Claims

1. A method for manufacturing a heat exchanger from a plastic material, said method comprising the steps of:
- feeding of at least two sheet elements (3, 4) made from said plastic material,
- by means of shaping means (6), shaping of said sheet elements (3, 4) to form a number of heat exchanger plates (7), whereby said shaping means are adapted to also undertake joining the sheet elements partly along edges so that a fluid inlet (12) and a fluid outlet (13) are created, whereby the sheet elements are pressed together, and
- two or more heat exchanger plates (7) are stacked on top of one another, **characterized by that**
the stacked heat exchanger plates (7) are joined in order to assemble them into a heat exchanger, whereby the stack (34) of heat exchanger plates (7) is welded so that the fluid inlets (12) and fluid outlets (13) of the respective heat exchanger plates (7) are combined to form a common fluid inlet and a common fluid outlet, and whereby the sides of the heat exchanger plates (7) are welded together, so that a fully functional heat exchanger is manufactured with plastic sheets (3, 4) as the only raw material,
whereby the sheet elements (3, 4) are joined by the shaping means, along part of the edges (11) of the heat exchanger plate (7) being formed, in such a way that a flange (24, 25) of sheet material extends beyond the joint (21, 23), and whereby the stacked heat exchanger plates are joined by welding the edges (11) of sheet material together, and
whereby the heat exchanger plates (7) are cut free from the sheet material before stacking the heat exchanger plates, and whereby the edges (11) of sheet material possibly sticking together along part of their length as a consequence of the cutting procedure are separated from each other by mechanical separation elements (26, 27), before welding the edges of sheet material together.

2. A method for manufacturing a heat exchanger according to claim 1, whereby, during shaping of said sheet elements (3, 4), a predetermined configuration is shaped by the sheets being placed in a mould (9, 10), a vacuum being created between the mould and the individual sheets to establish a firm contact between the mould and the sheets, and subsequently pressure is applied against the surfaces of the sheets opposite the mould, whereby the predetermined configuration is shaped on the sheets.

3. A method for manufacturing a heat exchanger according to claim 1 or 2, whereby, during shaping of said sheet elements (3, 4), two sheet elements are positioned between two opposed vacuum forming moulds (9, 10), and whereby the vacuum forming moulds are pressed against each other, whereby the two sheet elements are vacuum formed simultaneously and at the same time joined together at least along part of the edges (11) of the heat exchanger plate (7) being formed, as a result of the sheet elements being pressed together by the vacuum forming moulds.

4. A method for manufacturing a heat exchanger according to claim 3, whereby the two sheet elements (3, 4) are furthermore joined together between longitudinal channels (15) being formed in the heat exchanger plate (7) being formed, as a result of the sheet elements being pressed together by the vacuum forming moulds (9, 10).

5. A method for manufacturing a heat exchanger according to any one of the preceding claims, whereby, before bringing the edges of the respective two sheet elements (3, 4) into contact with each other, at least one nozzle (45) is introduced between edges of the respective two sheet elements, and, after bringing the edges into contact with each other, compressed gas is introduced between the sheet elements via the nozzle.

6. A method for manufacturing a heat exchanger according to any one of the preceding claims,
whereby the mechanical separation elements (26, 27) comprises at least one mat-like element (28) large enough to cover the corresponding length of edges of sheet material to be separated, and whereby the heat exchanger plates (7) are displaced in a direction normal to their general plane in relation to the mat-like element, so that the edges of sheet material are rubbed over the surface of the mat-like element, thereby causing the edges of sheet material to separate at least partially from each other.

7. A method for manufacturing a heat exchanger according to any one of the preceding claims, whereby the heat exchanger plates (7) are stacked one after each other in a stack (34) by positioning a first heat exchanger plate in the stack and subsequently positioning each following heat exchanger plate beneath the previously positioned heat exchanger plate in the stack, whereby the stack is carried by first support arms (35) during positioning of a heat exchanger plate, and whereby a heat exchanger plate after positioning beneath the stack is lifted up by means of a second support arm (38), and the first support arms are retracted laterally from the stack, so that the second support arm carries the stack itself.

8. A method for manufacturing a heat exchanger according to claim 7,
whereby the first support arms (35) have the form of flaps supported in a horizontal position and hinged about a longitudinal axis (36), so that they are swung in upward direction and away from each other as a consequence of the stack (34) passing between them during lifting of the stack by means of the second support arm (38).

9. A method for manufacturing a heat exchanger according to any one of the preceding claims, whereby the edges (11) of sheet material of adjacent heat exchanger plates (7) in the stack (34), along the fluid inlets (12) and fluid outlets (13) of the heat exchanger plates (7), are welded together by means of heated jaws (39) pinching the flanges (24, 25) against each other.

10. A method for manufacturing a heat exchanger according to claim 9,
whereby said edges (11) are welded in two subsequent steps, whereby, in the first step, the edges are heated by means of jaws (39), and whereby, in the second step, the edges are welded together by means of jaws (39).

11. A method for manufacturing a heat exchanger according to claim 9 and 10,
whereby said edges (11) of two adjacent heat exchanger plates (7) in the stack (34) are welded after the first support arms (35) have been retracted laterally from the upper one of said two adjacent heat exchanger plates in the stack, so that the second support arm (38) carries the stack during welding.

12. A method for manufacturing a heat exchanger according to any one of the preceding claims, whereby the heat exchanger plates (7) are welded together partly along their edges (11) so that fluid inlets (43) and fluid outlets (44) are created for fluid passages between the heat exchanger plates, whereby the stacked heat exchanger plates, along edges not forming inlets nor outlets, are joined by welding the flanges (24, 25) of sheet material together by means of bringing sides of the stack (34) of heat exchanger plates into contact with a heated plate (40, 41), thereby welding all heat exchanger plates in the stack together simultaneously.

## Patentansprüche

1. Verfahren zum Herstellen eines Wärmetauschers aus einem Kunststoffmaterial, wobei das Verfahren die Folgenden Schritte umfasst:
- Zuführen von mindestens zwei Blattelementen (3, 4), die aus dem Kunststoffmaterial gebildet sind,
- Formen der Blattelemente (3, 4), um eine Anzahl von Wärmetauscherplatten (7) zu bilden, mittels Formungsvorrichtungen (6), wobei die Formungsvorrichtungen dazu ausgelegt sind, auch das teilweise Zusammenfügen der Blattelemente entlang Kanten, derart, dass ein Fluideinlass (12) und ein Fluidauslass (13) erzeugt werden, durchzuführen, wobei die Blattelemente zusammen gepresst werden, und
- Aufeinanderstapeln von zwei oder mehr Wärmetauscherplatten (7), **dadurch gekennzeichnet, dass**
die gestapelten Wärmetauscherplatten (7) zusammengefügt werden, um sie zu einem Wärmetauscher zu montieren, wobei der Stapel (34) der Wärmetauscherplatten (7) so geschweißt ist, dass die Fluideinlässe (12) und die Fluidauslässe (13) der jeweiligen Wärmetauscherplatten (7) vereint werden, um einen gemeinsamen Fluideinlass und einen gemeinsamen Fluidauslass zu bilden, und wobei die Seiten der Wärmetauscherplatten (7) so zusammengeschweißt sind, dass ein voll funktionsfähiger Wärmetauscher mit Kunststoffblättern (3, 4) als einziges Ausgangsmaterial hergestellt wird,
wobei die Blattelemente (3, 4) mittels der Formungsvorrichtungen entlang eines Teils der Kanten (11) der Wärmetauscherplatte (7), die gebildet wird, derart zusammengefügt werden, dass sich ein Flansch (24, 25) des Blattmaterials über die Verbindung (21, 23) hinaus erstreckt und wobei die gestapelten Wärmetauscherplatten zusammengefügt werden, indem die Kanten (11) des Blattmaterials zusammengeschweißt werden, und
wobei die Wärmetauscherplatten (7) aus dem Blattmaterial ausgeschnitten werden, bevor die Wärmetauscherplatten gestapelt werden, und wobei die Kanten (11) des Blattmaterials, die möglicherweise entlang eines Teils ihrer Länge als Folge des Schnittvorgangs zusammenkleben, mittels mechanischer Trennelemente (26, 27) voneinander getrennt werden, bevor die Kanten des Blattmaterials zusammengeschweißt werden.

2. Verfahren zum Herstellen eines Wärmetauschers nach Anspruch 1, wobei während des Formens der Blattelemente (3, 4) eine vorgegebene Konfiguration geformt wird, indem die Blätter in eine Gussform (9, 10) gelegt werden, wobei ein Unterdruck zwischen der Gussform und den einzelnen Blättern erzeugt wird, um eine feste Verbindung zwischen der Gussform und den Blättern herzustellen, und anschließend Druck gegen die Oberflächen der Blätter, die sich gegenüber der Form befinden, ausgeübt wird, wobei die vorgegebene Konfiguration auf den Blättern geformt wird.

3. Verfahren zum Herstellen eines Wärmetauschers nach Anspruch 1 oder 2, wobei während des Formens der Blattelemente (3, 4) zwei Blattelemente zwischen zwei entgegengesetzten Unterdruckform-Gussformen (9, 10) positioniert sind, und wobei die Unterdruckform-Gussformen gegeneinander gepresst werden, wobei die zwei Blattelemente dadurch, dass die Blattelemente durch die Unterdruckform-Gussformen zusammengepresst werden, gleichzeitig unterdruckgeformt werden und zur gleichen Zeit mindestens entlang eines Teils der Kanten (11) der Wärmetauscherplatte (7), die gebildet wird, zusammengefügt werden.

4. Verfahren zum Herstellen eines Wärmetauschers nach Anspruch 3, wobei die zwei Blattelemente (3, 4) dadurch, dass die Blattelemente durch die Unterdruckform-Gussformen (9, 10) zusammengepresst werden, ferner zwischen longitudinalen Kanälen (15), die in der Wärmetauscherplatte (7), die gebildet wird, gebildet werden, zusammengefügt werden.

5. Verfahren zum Herstellen eines Wärmetauschers nach einem der vorhergehenden Ansprüche, wobei mindestens eine Düse (45) zwischen Kanten der jeweiligen zwei Blattelemente eingeführt wird, bevor die Kanten der jeweiligen zwei Blattelemente (3, 4) miteinander in Verbindung gebracht werden, und komprimiertes Gas über die Düse zwischen die Blattelemente eingeleitet wird, nachdem die Kanten miteinander in Verbindung gebracht worden sind.

6. Verfahren zum Herstellen eines Wärmetauschers nach einem der vorhergehenden Ansprüche, wobei die mechanischen Trennelemente (26, 27) mindestens ein mattenähnliches Element (28) umfassen, das groß genug ist, die entsprechende Länge der Kanten des Blattmaterials, das zu trennen ist, zu bedecken, und wobei die Wärmetauscherplatten (7) in einer Richtung senkrecht zu ihrer allgemeinen Ebene in Bezug auf das mattenähnliche Element so verlagert werden, dass die Kanten des Blattmaterials über die Oberfläche des mattenähnlichen Elements gerieben werden, wodurch bewirkt wird, dass die Kanten des Blattmaterials mindestens teilweise voneinander getrennt werden.

7. Verfahren zum Herstellen eines Wärmetauschers nach einem der vorhergehenden Ansprüche, wobei die Wärmetauscherplatten (7) nacheinander in einem Stapel (34) gestapelt werden, indem eine erste Wärmetauscherplatte in dem Stapel positioniert wird und anschließend jede folgende Wärmetauscherplatte unter der zuvor positionierten Wärmetauscherplatte in dem Stapel positioniert wird, wobei der Stapel während des Positionierens einer Wärmetauscherplatte von ersten Tragarmen (35) getragen wird, und wobei eine Wärmetauscherplatte mittels eines zweiten Tragarms (38) hochgehoben wird, nachdem sie unter dem Stapel positioniert worden ist, und die ersten Tragarme seitlich so von dem Stapel eingezogen werden, dass der zweite Tragarm den Stapel alleine trägt.

8. Verfahren zum Herstellen eines Wärmetauschers nach Anspruch 7, wobei die ersten Tragarme (35) die Form von Klappen haben, die in einer horizontalen Position getragen werden und um eine longitudinale Achse (36) klappbar sind, derart, dass sie infolge des Stapels (34), der sich während des Anhebens des Stapels mittels des zweiten Tragarms (38) zwischen ihnen bewegt, in einer Aufwärtsrichtung und voneinander weg geschwenkt werden.

9. Verfahren zum Herstellen eines Wärmetauschers nach einem der vorhergehenden Ansprüche, wobei die Kanten (11) des Blattmaterials von benachbarten Wärmetauscherplatten (7) in dem Stapel (34) entlang der Fluideinlässe (12) und der Fluidauslässe (13) der Wärmetauscherplatten (7) mittels erhitzter Klemmbacken (39), die die Flansche (24, 25) aneinanderdrücken, zusammengeschweißt werden.

10. Verfahren zum Herstellen eines Wärmetauschers nach Anspruch 9, wobei die Kanten (11) in zwei aufeinanderfolgenden Schritten geschweißt werden, wobei in dem ersten Schritt die Kanten mittels der Klemmbacken (39) erhitzt werden und wobei in dem zweiten Schritt die Kanten mittels der Klemmbacken (39) zusammengeschweißt werden.

11. Verfahren zum Herstellen eines Wärmetauschers nach Anspruch 9 und 10, wobei die Kanten (11) von zwei benachbarten Wärmetauscherplatten (7) in dem Stapel (34) geschweißt werden, nachdem die ersten Tragarme (35) seitlich von der oberen der zwei benachbarten Wärmetauscherplatten in dem Stapel so zurückgezogen worden sind, dass der zweite Tragarm (38) den Stapel während des Schweißens trägt.

12. Verfahren zum Herstellen eines Wärmetauschers nach einem der vorhergehenden Ansprüche, wobei die Wärmetauscherplatten (7) teilweise entlang ihrer Kanten (11) so zusammengeschweißt werden, dass die Fluideinlässe (43) und die Fluidauslässe (44) für Fluiddurchlässe zwischen den Wärmetauscherplatten erzeugt werden, wobei die gestapelten Wärmetauscherplatten entlang Kanten, die weder Einlässe noch Auslässe bilden, zusammengefügt werden, indem die Flansche (24, 25) des Blattmaterials zusammengeschweißt werden, indem die Seiten des Stapels (34) der Wärmetauscherplatten mit einer erhitzten Platte (40, 41) in Verbindung gebracht werden, wodurch alle Wärmetauscherplatten in dem Stapel gleichzeitig zusammengeschweißt werden.

## Revendications

1. Procédé de fabrication d'un échangeur de chaleur à partir d'un matériau plastique, comprenant les étapes suivantes:
- fournir au moins deux éléments de feuille (3, 4) constitués dudit matériau plastique,
- à l'aide de moyens de mise en forme (6), configurer lesdits éléments de feuille (3, 4) de manière à former un certain nombre de plaques d'échangeur de chaleur (7), dans lequel lesdits moyens de mise en forme sont aptes à réaliser aussi la jonction des éléments de feuille partiellement le long de bords, de telle sorte qu'une entrée de fluide (12) et une sortie de fluide (13) soient créées, moyennant quoi les éléments de feuille sont pressés l'un contre l'autre, et
- deux ou plus de deux plaques d'échangeur (7) sont empilées l'une au-dessus de l'autre,
**caractérisé en ce que**:
les plaques d'échangeur de chaleur empilées (7) sont jointes dans le but de les assembler en un échangeur de chaleur, dans lequel la pile (34) de plaques d'échangeur de chaleur (7) est soudée de telle sorte que les entrées de fluide (12) et les sorties de fluide (13) des plaques d'échangeur de chaleur respectives (7) soient combinées de manière à former une entrée de fluide commune et une sortie de fluide commune, et dans lequel les côtés des plaques d'échangeur de chaleur (7) sont soudés les uns aux autres, de telle sorte qu'un échangeur de chaleur complètement fonctionnel soit fabriqué avec les feuilles de plastique (3, 4) comme unique matière première,
dans lequel les éléments de feuille (3, 4) sont joints par les moyens de mise en forme, le long d'une partie des bords (11) de la plaque d'échangeur de chaleur (7) formée, de telle sorte qu'une bride (24, 25) de matériau en feuille s'étende au-delà de la jonction (21, 23), et dans lequel les plaques d'échangeur de chaleur empilées sont jointes en soudant les bords (11) du matériau en feuille les uns aux autres, et
dans lequel les plaques d'échangeur de chaleur (7) sont découpées à partir dudit matériau en feuille avant l'empilement des plaques d'échangeur de chaleur, et dans lequel les bords (11) du matériau en feuille qui collent éventuellement les uns aux autres le long d'une partie de leur longueur à la suite de la procédure de découpage sont séparés les uns des autres à l'aide d'éléments de séparation mécaniques (26, 27), avant le soudage des bords du matériau en feuille les uns aux autres.

2. Procédé de fabrication d'un échangeur de chaleur selon la revendication 1, dans lequel, pendant la mise en forme desdits éléments de feuille (3, 4), une configuration prédéterminée est formée par les feuilles qui sont placées dans un moule (9, 10), un vide étant créé entre le moule et les feuilles individuelles dans le but d'établir un contact ferme entre le moule et les feuilles, et ensuite une pression est appliquée contre les surfaces des feuilles opposées au moule, moyennant quoi la configuration prédéterminée est formée sur les feuilles.

3. Procédé de fabrication d'un échangeur de chaleur selon la revendication 1 ou 2, dans lequel, pendant la mise en forme desdits éléments de feuille (3, 4), deux éléments de feuille sont positionnés entre deux moules de formage sous vide opposés (9, 10), et dans lequel les moules de formage sous vide sont pressés l'un contre l'autre, moyennant quoi les deux éléments de feuille sont formés sous vide simultanément et sont en même temps joints l'un à l'autre au moins le long d'une partie des bords (11) de la plaque d'échangeur de chaleur (7) formée, à la suite du pressage des éléments de feuille l'un contre l'autre par les moules de formage sous vide.

4. Procédé de fabrication d'un échangeur de chaleur selon la revendication 3, dans lequel les deux éléments de feuille (3, 4) sont en outre joints l'un à l'autre entre des canaux longitudinaux (15) formés dans la plaque d'échangeur de chaleur (7) formée, à la suite du pressage des éléments de feuille l'un contre l'autre par les moules de formage sous vide (9, 10).

5. Procédé de fabrication d'un échangeur de chaleur selon l'une quelconque des revendications précédentes, dans lequel, avant que les bords des deux éléments de feuille respectifs (3, 4) soient amenés en contact l'un avec l'autre, au moins une buse (45) est introduite entre des bords des deux éléments de feuille respectifs et, une fois que les bords ont été amenés en contact l'un avec l'autre, un gaz comprimé est introduit entre les éléments de feuille par l'intermédiaire de la buse.

6. Procédé de fabrication d'un échangeur de chaleur selon l'une quelconque des revendications précédentes, dans lequel les éléments de séparation mécaniques (26, 27) comprennent au moins un élément de type tapis (28) qui est suffisamment grand pour couvrir la longueur correspondante des bords du matériau en feuille à séparer, et dans lequel les plaques d'échangeur de chaleur (7) sont déplacées dans une direction normale à leur plan général par rapport à l'élément de type tapis, de telle sorte que les bords du matériau en feuille soient frottés sur la surface de l'élément de type tapis, entraînant de ce fait les bords du matériau en feuille à se séparer au moins partiellement l'un de l'autre.

7. Procédé de fabrication d'un échangeur de chaleur selon l'une quelconque des revendications précédentes, dans lequel les plaques d'échangeur de chaleur (7) sont empilées une après l'autre en une pile (34) en positionnant une première plaque d'échangeur de chaleur dans la pile et en positionnant ensuite chaque plaque d'échangeur de chaleur suivante en dessous de la plaque d'échangeur de chaleur positionnée précédemment dans la pile, dans lequel la pile est portée par des premiers bras de support (35) pendant le positionnement d'une plaque d'échangeur de chaleur, et dans lequel une plaque d'échangeur de chaleur, après avoir été positionnée en dessous de la pile, est soulevée au moyen d'un deuxième bras de support (38), et les premiers bras de support sont rétractés latéralement par rapport à la pile, de telle sorte que le deuxième bras de support porte la pile elle-même.

8. Procédé de fabrication d'un échangeur de chaleur selon la revendication 7, dans lequel les premiers bras de support (35) se présentent sous la forme de rabats supportés dans une position horizontale et articulés autour d'un axe longitudinal (36), de telle sorte qu'ils oscillent dans une direction ascendante et à l'écart l'un de l'autre suite au passage de la pile (34) entre eux pendant le soulèvement au moyen du deuxième bras de support (38).

9. Procédé de fabrication d'un échangeur de chaleur selon l'une quelconque des revendications précédentes, dans lequel les bords (11) du matériau en feuille de plaques d'échangeur de chaleur adjacentes (7) dans la pile (34), le long des entrées de fluide (12) et des sorties de fluide (13) des plaques d'échangeur de chaleur (7), sont soudés les uns aux autres au moyen de mâchoires chauffées (39) qui pincent les brides (24, 25) l'une contre l'autre.

10. Procédé de fabrication d'un échangeur de chaleur selon la revendication 9, dans lequel lesdits bords (11) sont soudés en deux étapes successives, dans lequel, lors de la première étape, les bords sont chauffés au moyen de mâchoires (39), et dans lequel, lors de la deuxième étape, les bords sont soudés l'un à l'autre au moyen de mâchoires (39).

11. Procédé de fabrication d'un échangeur de chaleur selon les revendications 9 et 10, dans lequel lesdits bords (11) de deux plaques d'échangeur de chaleur adjacentes (7) dans la pile (34) sont soudés après que les premiers bras de support (35) aient été rétractés latéralement par rapport à la plaque supérieure desdites deux plaques d'échangeur de chaleur adjacentes dans la pile, de telle sorte que le deuxième bras de support (38) porte la pile pendant le soudage.

12. Procédé de fabrication d'un échangeur de chaleur selon l'une quelconque des revendications précédentes, dans lequel les plaques d'échangeur de chaleur (7) sont soudées les unes aux autres partiellement le long de leurs bords (11) de telle sorte que des entrées de fluide (43) et des sorties de fluide (44) soient créées pour former des passages de fluide entre les plaques d'échangeur de chaleur, dans lequel les plaques d'échangeur de chaleur empilées, le long de bords qui ne forment pas d'entrées ni de sorties, sont jointes en soudant les brides (24, 25) du matériau en feuille l'une à l'autre en amenant les côtés de la pile (34) des plaques d'échangeur de chaleur en contact avec une plaque chauffée (40, 41), soudant de ce fait simultanément toutes les plaques d'échangeur de chaleur les unes aux autres dans la pile.
